Europäisches Patentamt

European Patent Office

Office européen des brevets

(11) Publication number: **0 104 464**

**B1**

(12) **EUROPEAN PATENT SPECIFICATION**

(45) Date of publication of patent specification: **09.04.86**

(51) Int. Cl.⁴: **A 61 D 7/00, A 61 J 1/08**

(21) Application number: **83108482.7**

(22) Date of filing: **29.08.83**

(54) **Improvements in or relating to fluid applicators.**

(30) Priority: **17.09.82 US 419229**

(43) Date of publication of application:
**04.04.84 Bulletin 84/14**

(45) Publication of the grant of the patent:
**09.04.86 Bulletin 86/15**

(84) Designated Contracting States:
**AT BE CH DE FR GB IT LI LU NL SE**

(56) References cited:
**FR-A-1 259 042**
**GB-A-1 118 081**
**US-A-2 805 662**
**US-A-3 099 264**
**US-A-3 517 668**

(73) Proprietor: **BANNER GELATIN PRODUCTS, CORP.**
**20730 Dearborn Street**
**Chatsworth California 91311 (US)**

(72) Inventor: **Brown, Jack B.**
**17810 San Jose**
**Granada Hills California 91344 (US)**
Inventor: **Bischoff, Wijnand Jacob**
**7511 Darcel Mississaugula**
**Ontario L472X6 (CA)**

(74) Representative: **Howden, Christopher Andrew et al**
**FORRESTER & BOEHMERT Widenmayerstrasse 4/I**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

The present invention relates generally to fluid applicators for administering fluids to animals, and more particularly, to an improved fluid applicator for use with a compressible capsule for administering fluids such as a medicine or food supplement into the mouth of an animal.

The prior art discloses fluid applicators which can be used to deliver a premeasured dosage of fluid far into the mouth of an animal. Some such applicators, however, do not extend far enough into the mouth of the animal and as a result some of the fluid may be expelled and not swallowed. Other applicators may extend far enough into the mouth, but take too long to discharge the fluid so that the animal may not receive all of the fluid unless it can be restrained for a relatively lengthy period.

US—A—3,099,264 discloses a fluid applicator for discharging fluid from a compressible fluid-filled capsule. The applicator comprises a pair of arms connected at one end by a bow-spring, one of the arms being adapted for holding said capsule, so that movement of the other arm towards said capsule when held by said one arm causes the application of pressure to the capsule, said fluid being discharged from the capsule on application of pressure from said arm. This apparatus is intended for use with disposable syringes having a compressible sack closed at an outer end by a needle hub. There is no cutting means in this prior art applicator for severing the end of said capsule.

Accordingly, there exists a need for an applicator that will reach far enough into the animal's mouth and will discharge the fluid quickly enough to ensure that the animal receives it.

An object of the present invention is to provide an improved fluid applicator for use with a fluid-filled capsule which can be used to quickly discharge a premeasured dosage of a medicinal fluid or food supplement from the capsule into the mouth of an animal.

Accordingly, the invention provides a fluid applicator for discharging fluid from a compressible fluid-filled capsule, which applicator comprises a frame adapted for holding said capsule; and a pressure arm hingedly connected to said frame for movement toward said capsule when held by said frame and adapted to apply pressure thereto; and which applicator is characterized by cutting means associated with said pressure arm for severing the tip of said capsule upon movement of said arm toward said capsule held by said frame to permit said fluid to be discharged therefrom on application of pressure from said arm.

Moreover the invention provides a fluid applicator according to the independent Claim 7.

In operation the applicator is inserted into an animal's mouth, and one quick continuous motion of the pressure arm will cause the cutting means to sever the capsule and then immediately compress the capsule to squirt the fluid from the capsule deep into the mouth of the animal.

Preferably, said frame comprises a recess to hold said capsule. Desirably, said pressure arm comprises a protuberance projecting from said arm for applying pressure to said capsule along the length thereof.

Said cutting means may comprise a blade depending from said pressure arm and preferably defines an opening through which fluid can flow after said capsule is severed.

In order that the invention may be more readily understood, and so that further features thereof may be appreciated, an embodiment of the invention will now be described, by way of example, with reference to the accompanying drawings, in which:

Figure 1 is a side elevational view of a fluid applicator of the invention, with the pressure arm in an "up" position prior to compression of a capsule, and with portions broken away to illustrate details thereof;

Figure 2 is a side elevational view of the applicator of Figure 1 with the pressure arm in a "down" position compressing a capsule and with portions broken away to illustrate details thereof;

Figure 3 is a top plan view of the applicator viewed generally on line 3—3 of Figure 1 with portions broken away to illustrate details thereof;

Figure 4 is a front view of a part of the applicator of Figure 1; and

Figure 5 is a sectional elevation of the applicator taken generally on line 5—5 of Figure 2.

As shown in the accompanying drawings, the present invention is embodied in a novel medicinal fluid applicator. More particularly, as shown in the Figures, a preferred embodiment of applicator, designated generally by reference numeral 10, comprises a substantially elongate frame 12 having a distal end 14 and a proximal end 16. The frame 12 provides walls 18 which define a capsule recess which extends longitudinally from the distal end 14 of the frame 12 for receiving a compressible fluid-filled capsule 20 containing a premeasured volume of fluid. The distal end 14 of the frame 12 also defines a tip opening 21 through which an extending tip 22 of the capsule 20 can pass. The proximal end 16 of the frame 12 is provided with a hand grip 24 which extends in a direction generally perpendicular to the frame 12.

A substantially elongate pressure arm 26 having a distal end 27 and a proximal end 28 is attached near its proximal end 28 to the proximal end 16 of the frame 12 and extends in a direction generally parallel to that of the frame 12. A pin 30, extends through aligned openings formed in the proximal end 16 of the frame 12 and the proximal end 28 of the pressure arm 26 to hingedly secure the pressure arm 26 to the frame 12 such that the pressure arm 26 can move toward and away from the capsule 20.

A blade 32 depends from the distal end 27 of the pressure arm 26 such that, when the pressure arm 26 is moved toward the capsule 20, the blade 32 moves along a path adjacent to a front face 34 formed at the distal end 14 of the frame 12. As shown in Figure 4, the blade 32 has an opening 36 which becomes aligned with the tip opening 21 when the pressure arm 12 is moved into the capsule recess.

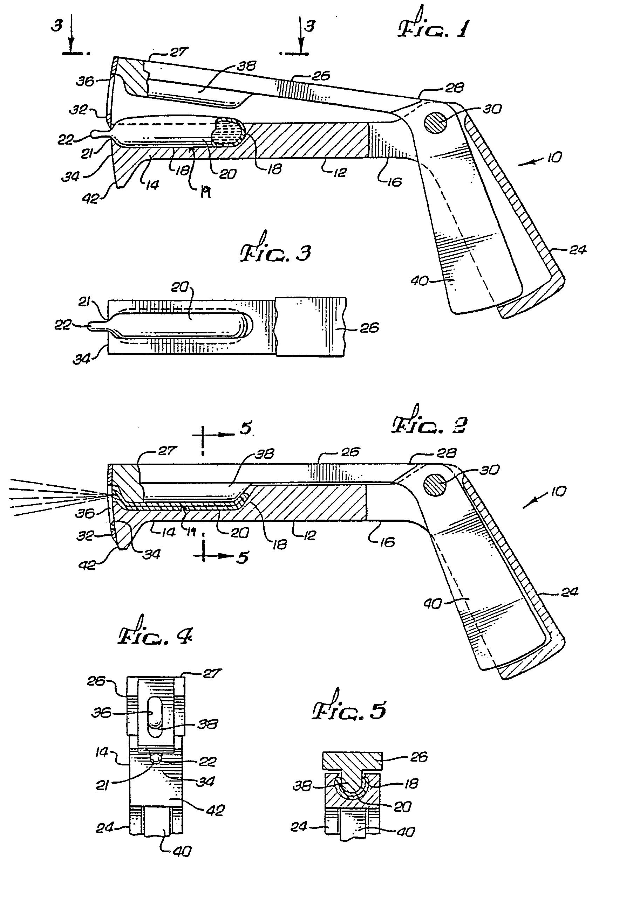

A protuberance 38 depends from the pressure arm 26 adjacent to its distal end 27. As shown in Figure 2, the protuberance 38 is of a sufficient depth that it will fully compress a fluid-filled capsule 20 that is positioned in the capsule recess when the pressure arm 26 is moved down into the frame.

A hand lever 40 depends from the proximal end 28 of the pressure arm 26 in a direction generally perpendicular to the pressure arm 26 and at a slight angle to the hand grip 24 joined to the proximal end of the frame 12. The hand lever 40 passes through an opening in the frame 12, the opening being sized to accommodate movement of the hand lever 40.

A portion of the front face 34 of the distal end 14 of the frame 12 provides a guard surface 42 comprising an extension of the front face 34 of the frame 12. The blade 32 fits in juxtaposition with the guard surface 42 when the pressure arm 12 is moved down toward the capsule recess 19. The close proximity between the blade 32 and the guard surface 42 will prevent an animal from being cut or otherwise injured by the blade 32.

In use, a compressible fluid-filled capsule 20 having a tip 22 extending therefrom is placed in the capsule recess such that a portion of the tip 22 passes through the tip opening 21 and extends out beyond the front face 34 of the frame 12. The hand grip 24 and the hand lever 40 are then grasped and the distal end 14 of the frame 12 containing the capsule 20 is inserted into the mouth of an animal. Hand pressure is then exerted on the hand lever 40 causing this to move toward the hand grip 24, and causing the pressure arm 26 to move toward the capsule recess wherein the capsule 20 is nestled.

As the pressure arm 26 moves toward the capsule 20, the blade 32 moves along a path immediately adjacent to the front face 34 and severs the tip 22 from the capsule 20. As the pressure arm 12 continues to move down, the capsule 20 becomes compressed by protuberance 38, and the fluid therein squirts out from the severed tip 32 into the mouth of the animal.

From the foregoing, it will be appreciated that the present invention provides an improved medicinal fluid applicator 10 which can quickly provide a desired dosage of a medicinal fluid or food supplement to an animal. In a single motion, the medicinal fluid applicator 10 can sever the tip 22 from a fluid-filled capsule 20 and cause the fluid therein to squirt quickly from the capsule 20 deep into the mouth of the animal being treated.

## Claims

1. A fluid applicator (10) for discharging fluid from a compressible fluid-filled capsule (20), which applicator comprises a frame (12) adapted for holding such capsule; and a pressure arm (26) hingedly connected to said frame for movement toward said capsule when held by said frame and adapted to apply pressure thereto; characterized by cutting means (32) associated with said pressure arm (26) for severing the tip (22) of said capsule (20) upon movement of said arm toward said capsule held by said frame to permit said fluid to be discharged therefrom on application of pressure from said arm.

2. A fluid applicator according to claim 1, wherein said frame comprises a recess (19) to receive said capsule.

3. A fluid applicator according to claim 1 or claim 2, wherein said pressure arm comprises a protuberance (38) projecting from said arm (26) for applying pressure to said capsule along the length thereof.

4. A fluid applicator according to claim 1, claim 2 or claim 3, wherein said cutting means comprises a blade (32) depending from said pressure arm.

5. A fluid applicator according to any one of claims 1 to 4, wherein said cutting means (32) defines an opening (36) through which fluid can flow after said tip (22) is severed from said capsule (20).

6. A fluid applicator according to any one of claims 1 to 5, further comprising a guard comprising a surface (42) depending from said frame which is moved into juxtaposition with said cutting means (32) when said pressure arm is moved toward said frame.

7. A fluid applicator (10), for discharging fluid from a compressible fluid-filled capsule (20), which applicator comprises a frame (12) adapted for holding such capsule; and a pressure arm (26) hingedly connected to said frame for movement toward and away from said capsule; characterized in that the frame (12) defines a capsule recess (19) to hold the capsule in place; the pressure arm is connected to said frame for movement toward and away from said capsule recess; a blade (32) depends from said pressure arm for severing the tip (22) of said capsule when said pressure arm moves toward the capsule when held by said recess; a protuberance (38) projects from said pressure arm to compress the capsule against said frame and cause fluid to be expelled therefrom when said arm is moved toward the capsule; and a guard, comprisig a surface (42) depending from said frame, is moved into juxtaposition with said blade when said pressure arm is moved toward said capsule.

8. A fluid applicator according to any one of claims 1 to 7, wherein said pressure arm is hingedly connected to a hand grip (24) provided in said frame and wherein said pressure arm is provided with a hand lever (40) for hingedly moving said arm.

9. A fluid applicator according to any one of claims 1 to 8, wherein fluid to be discharged is a medicinal fluid.

**Patentansprüche**

1. Fluidaufbringer (10) für die Abgabe eines Fluides aus einer kompressiblen, fluidgefüllten Kapsel (20), welcher Aufbringer einen Rahmen (12) aufweist, der für eine Halterung einer solchen Kapsel geeignet ist; und einen Druckarm (26), der beweglich mit dem Rahmen verbunden ist, für eine Bewegung zu der Kapsel hin, wenn diese durch den Rahmen gehaltert ist, und geeignet ist, einen Druck darauf auszuüben; gekennzeichnet durch Schnittmittel (32), die dem Druckarm (26) zugeordnet sind, für eine Schneidung der Spitze (22) der Kapsel (20) auf eine Bewegung des Armes zu der Kapsel hin, die durch den Rahmen gehalten ist, um zu ermöglichen, daß Fluid aus dieser abgegeben wird, bei Aufbringung eines Druckes auf den Arm.

2. Fluidaufbringer nach Anspruch 1, wobei der Rahmen eine Aussparung (19) aufweist, um die Kapsel aufzunehmen.

3. Fluidaufbringer nach Anspruch 1 oder 2, wobei der Druckarm einen Vorsprung (38) aufweist, der aus dem Arm (26) hervorragt, für eine Druckaufbringung auf die Kapsel, entlang der Länge derselben.

4. Fluidaufbringer nach Anspruch 1, 2 oder 3, wobei die Schneidmittel eine Klinge (32) aufweisen, an dem Druckarm.

5. Fluidaufbringer nach einem der Ansprüche 1 bis 4, wobei die Schneidmittel (32) eine Öffnung (36) bilden, durch welche Fluid strömen kann, nachdem die Spitze (22) von der Kapsel (20) geschnitten ist.

6. Fluidaufbringer nach einem der Ansprüche 1 bis 5, weiter aufweisend eine Deckfläche (42) an dem Rahmen, die in unmittelbare Nebenstellung zu den Schneidmitteln (32) bewegt ist, wenn der Druckarm zu dem Rahmen bewegt ist.

7. Fluidaufbringer (10) für die Abgabe eines Fluides aus einer kompressiblen fluidgefüllten Kapsel (20), welcher Aufbringer einen Rahmen (12) aufweist, der für eine Halterung einer solchen Kapsel geeignet ist; und einen Druckarm (26), der beweglich mit dem Rahmen verbunden ist, für eine Bewegung zu der Kapsel hin und von dieser weg; dadurch gekennzeichnet, daß der Rahmen (12) eine Kapselaussparung (19) bildet, um die Kapsel an ihrem Ort zu haltern; daß der Druckarm mit dem Rahmen verbunden ist für eine Bewegung zu der Kapselaussparung hin und von dieser weg; daß eine Klinge (32) sich an dem Druckarm befindet, für eine Schneidung der Spitze (22) der Kapsel, wenn der Druckarm sich zu der Kapsel hinbewegt und diese in der Aussparung gehalten ist; daß ein Vorsprung (38) von dem Druckarm vorsteht, um die Kapsel zusammenzudrücken, gegen den Rahmen, und bewirkt wird, daß das Fluid aus dieser ausgestoßen wird, wenn der Arm zu der Kapsel hinbewegt wird; und daß eine Abdeckung, aufweisend eine Fläche (42) an dem Rahmen vorgesehen ist, bewegt in eine Stellung neben der Klinge, wenn der Druckarm zu der Kapsel hinbewegt wird.

8. Fluidaufbringer nach einem der Ansprüche 1 bis 7, wobei der Druckarm beweglich mit einem Handgriff (24) verbunden ist, vorgesehen in dem Rahmen, und wobei der Druckarm mit einem Handhebel (40) verbunden ist, für eine gelenkige Bewegung des Armes.

9. Fluidaufbringer nach einem der Ansprüche 1 bis 8, wobei das abgegebene Fluid eine medizinisches ist.

**Revendications**

1. Applicateur de liquide (10) destiné à décharger un liquide d'une capsule compressible remplie de liquide (20), lequel applicateur comprend un bâti (12) adapté pour maintenir ladite capsule; et un bras de pression (26) relié à charnière audit bâti pour se rapprocher de ladite capsule quand elle est maintenue par ledit bâti, et adapté pour y appliquer une pression sur celle-ci; caractérisé par des moyens de découpe (32) associés audit bras de pression (26) pour sectionner ladite pointe (22) de la capsule (20) lors du mouvement dudit bras en direction de ladite capsule maintenue par ledit bâti pour permettre audit liquide d'en être déchargé lors de l'application de la pression par ledit bras.

2. Applicateur de liquide selon la revendication 1, caractérisé en ce que ledit bâti comprend une poche (19) pour recevoir ladite capsule.

3. Applicateur de liquide selon la revendication 1 ou 2, caractérisé en ce que ledit bras de pression comprend une protubérance (38) faisant saillie dudit bras (26) pour appliquer une pression à ladite capsule le long de sa longueur.

4. Applicateur de ladite selon l'une quelconque des revendications 1 à 3, caractérisé en ce que lesdits moyens de découpe comprennent une lame (32) fixée en étant dirigée vers le bas audit bras de pression.

5. Applicateur de liquide selon l'une quelconque des revendications 1 à 4, caractérisé en ce que lesdits moyens de découpe (32) définissent une ouverter (36) par laquelle le liquide peut s'écouler lorsque ladite pointe (22) a été sectionnée de ladite capsule (20).

6. Applicateur de liquide selon l'une quelconque des revendications 1 à 5, caractérisé en ce qu'il comprend en outre une protection comportant une surface (42) fixée en étant dirigé vers la bas audit bâti et qui se déplace an juxtaposition avec lesdits moyens de découpe (32) quand ledit bras de pression est déplacé en direction dudit bâti.

7. Applicateur de liquide (10) destiné à décharger un liquide d'une capsule compressible remplie de liquide (20) lequel applicateur comprend un bâti (12) adapté pour maintenir cette capsule, et un bras de pression (26) rélié à charnière audit bâti pour se rapprocher et s'éloigner de ladite capsule, caractérisé en ce que le bâti (12) définit une poche à capsule (19) qui maintient la capsule en place; le bras de pression est relié audit bâti de manière à pouvoir se rapprocher et s'éloigner de ladite poche à capsule; une lame (32) est fixée en étant dirigée vers le bas audit bras de pression en vue de sectionner la partie de pointe (22) de ladite capsule quand ledit bras de pression se rapproche de la capsule quand elle est maintenue dans ladite poche; une protubérance (38) fait saillie dudit bras de pression pour comprimer la capsule contre ledit bâti et amener le liquide à en être expulsé quand ledit bras est rapproché de la capsule; et une protection comprenant une surface (42) fixée en étant dirigée vers le bas audit bâti est amenée en juxtaposition avec ladite lame quand ledit bras de pression est rapproché de ladite capsule.

8. Applicateur de liquide selon l'une quelconque des revendications 1 à 7, caractérisé en ce que ledit bras de pression est relié à charnière à ladite poignée (24) prévue dans ledit bâti et en ce que ledit bras de pression comprend un levier à main (40) pour déplacer ledit bras autour de la charnière.

9. Applicateur de liquide selon l'une quelconque des revendications 1 à 8, caractérisé en ce que le liquide à décharger est un liquide médicinal.

*Fig. 1*

*Fig. 3*

*Fig. 2*

*Fig. 4*

*Fig. 5*